# FASCICULE DE BREVET EUROPEEN

(11) **EP 1 353 789 B1**
(45) Date de publication et mention de la délivrance du brevet: **12.01.2005**
(21) Numéro de dépôt: 02700359.9
(22) Date de dépôt: 22.01.2002
(51) Int. Cl.: B29C 70/48, B29C 70/54

(54) **PROCEDE D'INJECTION DE RESINE DANS UN MODULE CONTENANT UNE PREFORME FIBREUSE**
VERFAHREN ZUM EINSPRITZEN VON KUNSTHARZ IN EIN EINEN FASERIGEN VORFORMLING ENTHALTENDES FORMWERKZEUG
METHOD FOR INJECTING RESIN INTO A MOULD CONTAINING A FIBROUS PREFORM

(30) Priorité: 24.01.2001 FR 0100926
(43) Date de publication de la demande: 22.10.2003
(73) Titulaire: Eads CCR, 75781 Paris Cedex 16 (FR)
(72) Inventeur: FILLEUL, Didier, F-91570 Bièvres (FR)
(74) Mandataire: Poulin, Gérard
(86) Numéro de dépôt international: PCT/FR2002/000250
(87) Numéro de publication internationale: WO 2002/058919

(56) Documents cités:
- US-A- 4 247 018
- US-A- 4 467 941
- US-A- 5 516 271
- US-A- 5 906 782
- US-B1- 6 168 408

## Description

### Domaine technique

L'invention concerne un procédé d'injection de résine dans un moule contenant une préforme fibreuse, de façon à fabriquer une pièce en matériau composite en utilisant la technique du moulage par transfert de résine, habituellement appelée "technique RTM" (de l'anglais "Resin Transfer Molding").

Le procédé selon l'invention est particulièrement adapté à la fabrication de pièces de grandes dimensions en matériau composite.

L'invention peut être utilisée dans tous les secteurs industriels mettant en oeuvre des pièces en matériau composite formées de fibres longues, noyées dans une matrice de résine. Parmi ces secteurs, on citera notamment les industries automobile et aérospatiale.

### Etat de la technique

Comme on l'a décrit notamment dans le document FR-A-2 761 001, il a déjà été envisagé de fabriquer des pièces de grandes dimensions en matériau composite selon la technique RTM. A cet effet, la solution habituelle consiste à placer dans une même cuve étanche un nombre de réservoirs (appelés "pots") remplis de résine suffisant pour fabriquer la pièce considérée. Ainsi et uniquement à titre d'exemple, sachant que le volume maximal de résine contenu dans un pot est d'environ 10 kilogrammes, la fabrication d'une pièce contenant environ 60 litres de résine nécessite de placer au moins six pots de résine dans la cuve étanche.

Dans une installation telle que celle qui est décrite dans le document FR-A-2 761 001, des moyens de chauffage tels que des résistances électriques sont placés dans la cuve étanche, dans le fond de celle-ci et autour de chacun des pots, de façon à liquéfier la résine dans les pots pour permettre son injection dans le moule.

Lorsque cette installation connue est mise en oeuvre, la résine contenue dans les pots est injectée dans le moule, sous l'effet de la pression régnant dans la cuve étanche. Plus précisément, des signaux émis par un débitmètre ou par des moyens de pesée associés aux différents pots, révélant l'état de remplissage de chacun d'entre eux, sont transmis à une unité centrale. En réponse à ces signaux, l'unité centrale commande l'ouverture successive d'électrovannes normalement fermées associées à chacun des pots de résine. Par conséquent, le contenu de chacun des pots est vidé successivement dans le moule de façon à réaliser la pièce désirée.

L'installation décrite dans le document FR-A-2 761 001 présente différents inconvénients. Ces inconvénients concernent principalement sa mise en oeuvre industrielle

Ainsi, la fabrication de pièces de très grandes dimensions impose de recourir à un nombre important de pots de résine contenus dans une même cuve étanche. Cela conduit à l'utilisation d'une installation lourde et encombrante, dont la taille dépend des dimensions de la pièce que l'on désire fabriquer.

Un autre inconvénient de l'installation décrite dans le document FR-A-2 761 001 concerne le risque de réaction exothermique découlant du chauffage en masse de la résine contenue dans les différents pots qui sont placés dans la cuve étanche. L'éventualité d'une telle réaction est difficilement acceptable dans une installation industrielle.

Par ailleurs, le document FR-A-2 750 071 propose une installation utilisant la technique RTM, dans laquelle on transfère dans un vérin la résine contenue dans un pot, au moyen d'un piston placé au-dessus de la résine et sur lequel agit de l'air comprimé. Dans ce document, la technique utilisée pour amener la résine à l'état liquide n'est pas précisée.

Le document US-A-5 545 029 enseigne de mélanger deux composants liquides contenus dans des réservoirs séparés, avant de les injecter dans un moule.

Enfin, le document US-A-5 187 001 décrit une installation de fabrication de pièces de petites tailles, mettant en oeuvre la technique RTM. L'installation comprend deux réservoirs contenant des résines de natures différentes, qui sont utilisées à tour de rôle selon les pièces à fabriquer. A chaque commutation d'un réservoir à l'autre, le circuit du réservoir utilisé auparavant est purgé.

### Exposé de l'invention

L'invention a pour objet un procédé d'injection de résine dans un moule de grande taille contenant une préforme fibreuse, mettant en oeuvre une installation dont la taille et le poids sont indépendants des dimensions de la pièce à fabriquer et sont comparables à ceux d'une installation apte à fabriquer des pièces de petites tailles.

Conformément à l'invention, ce résultat est obtenu au moyen d'un procédé d'injection de résine dans un moule contenant une préforme fibreuse, caractérisé en ce qu'on injecte la résine dans le moule alternativement à partir d'un premier réservoir et à partir d'un deuxième réservoir, pour les vider à tour de rôle, et on met en place le premier réservoir plein de résine tout en injectant la résine à partir du deuxième réservoir, et inversement, de façon à injecter en continu dans le moule une quantité de résine supérieure au contenu cumulé desdits premier réservoir et deuxième réservoir.

La mise en oeuvre de ce procédé permet, en utilisant seulement deux réservoirs de dimensions courantes (contenant par exemple environ 10 kilogrammes de résine chacun), de réaliser des pièces dont la taille n'est pratiquement limitée que par l'évolution de la viscosité de la résine. Une même installation, de relativement petite taille, peut ainsi être utilisée pour fabriquer des pièces différentes, qui peuvent être très grandes.

Dans un mode de réalisation préféré de l'invention, on injecte la résine alternativement à partir du premier réservoir et à partir du deuxième réservoir en chauffant la surface libre de la résine contenue dans lesdits réservoirs, pour provoquer une fusion locale de ladite résine, et en pompant vers le moule la résine localement fondue. Le chauffage de la résine limité à sa surface libre, à l'intérieur de chacun des réservoirs, permet de supprimer tout risque de réaction exothermique. La mise en oeuvre industrielle de l'installation s'en trouve grandement facilitée.

Dans le mode de réalisation préféré de l'invention, on chauffe la surface libre de la résine dans chacun des premier et deuxième réservoirs, au moyen d'un plateau chauffant reposant par gravité sur ladite surface libre.

Dans ce cas, on pompe avantageusement la résine localement fondue, dans chacun des premier et deuxième réservoirs, au moyen d'une pompe solidaire du plateau chauffant.

De préférence, avant d'injecter la résine dans le moule, on purge les circuits reliant le premier réservoir et le deuxième réservoir audit moule.

Le procédé selon l'invention est particulièrement adapté pour être mis en oeuvre en utilisant de la résine dégazée.

Toutefois, en variante, on peut aussi dégazer la résine entre les premier et deuxième réservoirs et le moule.

### Brève description des dessins

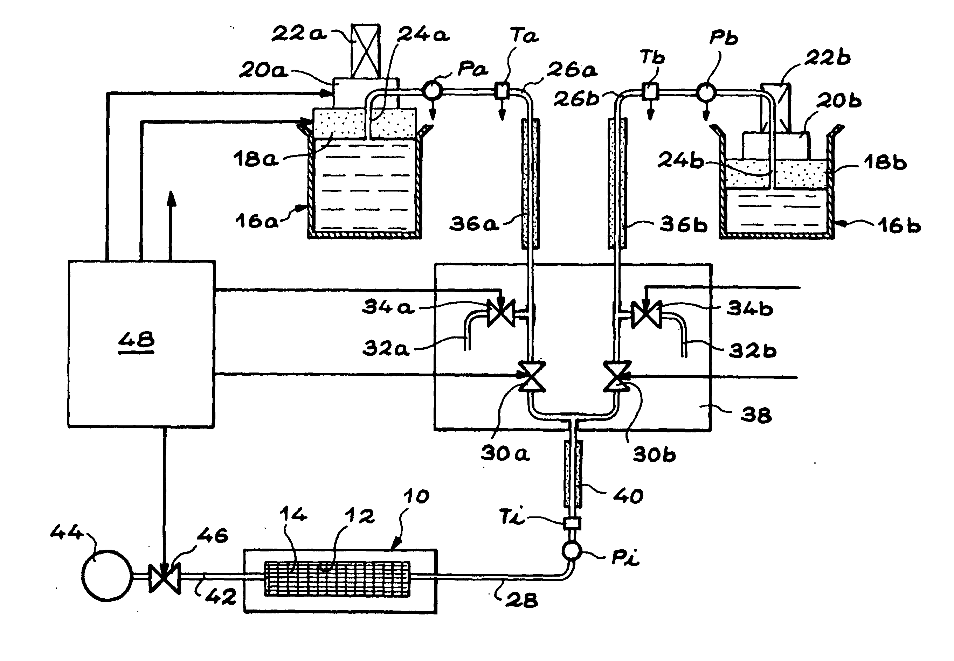

On décrira à présent, à titre d'exemple non limitatif, un mode de réalisation préféré du procédé selon l'invention, en se référant aux dessins annexés, dans lesquels la figure unique représente schématiquement une installation mettant en oeuvre le procédé d'injection selon l'invention.

### Description détaillée d'un mode de réalisation préféré de l'invention

Sur la figure unique, on a représenté schématiquement un mode de réalisation préféré, bien que non limitatif, d'une installation mettant en oeuvre le procédé d'injection de résine conforme à l'invention.

L'installation représentée sur la figure comprend un moule 10, en plusieurs parties, délimitant intérieurement une cavité 12 dont la forme et les dimensions sont les mêmes que celles de la pièce à fabriquer. Avant la fermeture du moule 10, on place une préforme fibreuse 14 dans la cavité 12.

L'installation comprend, de plus, un premier réservoir 16a et un deuxième réservoir 16b, aptes à contenir l'un et l'autre une quantité déterminée d'une résine choisie en fonction des caractéristiques de la pièce à fabriquer. La capacité de chacun des réservoirs 16a et 16b est généralement la même. Cette capacité peut, par exemple, être d'environ 10 kilogrammes. Toutefois, cette valeur n'est donnée qu'à titre illustratif et nullement limitatif de la portée de l'invention.

Les réservoirs peuvent notamment être des pots de résine d'une contenance de 10 kilogrammes disponibles dans le commerce. Lorsque le premier réservoir est vide, l'opérateur peut ainsi le remplacer par un réservoir plein.

Chacun des réservoirs 16a et 16b est ouvert vers le haut, de façon telle que la résine qu'il contient présente une surface libre sensiblement horizontale. A température ambiante, la résine est à l'état solide ou pâteux.

Un plateau chauffant 18a, 18b repose par gravité sur la surface libre de la résine contenue respectivement dans le premier réservoir 16a et dans le deuxième réservoir 16b. Plus précisément, la section horizontale de chacun des plateaux chauffants 18a et 18b est sensiblement identique à celle des réservoirs 16a et 16b, de telle sorte que les réservoirs sont fermés vers le haut par les plateaux mais que ces derniers peuvent se déplacer vers le bas dans les réservoirs lorsque la quantité de résine qu'ils contiennent diminue.

Les moyens de chauffage contenus dans les plateaux 18a et 18b peuvent être de nature quelconque, sans sortir du cadre de l'invention. Il peut notamment s'agir de résistances électriques (non représentées). Lorsqu'ils sont mis en oeuvre, ces moyens de chauffage sont aptes à faire fondre superficiellement la résine uniquement à proximité immédiate de sa surface libre.

Comme on le comprendra mieux par la suite, cet agencement permet de pomper progressivement la résine contenue dans l'un ou l'autre des réservoirs 16a et 16b, tout en supprimant tout risque de réaction exothermique ayant pour origine la fusion en masse de la résine.

Chacun des plateaux chauffants 18a et 18b supporte une pompe, désignée respectivement par les références 20a et 20b. Les moteurs 22a et 22b des pompes 20a et 20b sont également illustrés sur la figure unique.

Chacune des pompes 20a et 20b est agencée de façon à pouvoir aspirer la résine fondue en contact avec la face inférieure du plateau chauffant correspondant 18a, 18b, par un ou plusieurs passages 24a, 24b traversant ce plateau et débouchant sur sa face inférieure.

Un orifice de refoulement de chacune des pompes 20a et 20b est raccordé sur une canalisation correspondante 26a, 26b. A leur extrémité opposée, chacune des canalisations 26a et 26b est raccordée sur une canalisation commune 28, dont l'extrémité opposée est elle-même raccordée sur le moule 10. L'ensemble matérialisé par les passages 24a, 24b et par les canalisations 26a, 26b et 28 constitue un circuit d'alimentation du moule 10 en résine, alternativement à partir du premier réservoir 16a et à partir du deuxième réservoir 16b.

A proximité de leur point de raccordement sur la canalisation commune 28, chacune des canalisations 26a et 26b comprend une électrovanne d'injection 30a, 30b. Lorsque l'installation est à l'arrêt, les deux électrovannes 30a et 30b sont normalement fermées. De plus, lorsque l'installation est en fonctionnement, les deux électrovannes 30a et 30b ne sont jamais ouvertes simultanément.

Immédiatement en amont des électrovannes d'injection 30a et 30b, une canalisation de purge 32a, 32b, munie d'une électrovanne de purge 34a, 34b, est branchée en dérivation sur chacune des canalisations 26a et 26b. Les électrovannes de purge 34a et 34b sont normalement fermées.

Le circuit d'alimentation du moule 10 en résine comprend un certain nombre de zones chauffées, permettant de maintenir la résine injectée dans le moule à une température propre à permettre le remplissage complet de celui-ci et l'imprégnation complète de la préforme fibreuse 14. Ainsi, à titre d'exemple, les canalisations 26a et 26b comprennent des zones chauffées 36a, 36b dans leurs parties situées entre les pompes 20a et 20b et les canalisations de purge 32a et 32b. La partie des canalisations 26a et 26b raccordée sur la canalisation 28, intégrant les électrovannes 30a, 30b, 34a et 34b, est également placée dans une zone chauffée 38. Enfin, une autre zone chauffée 40 est également prévue sur la canalisation 28.

Pour contrôler au mieux les conditions dans lesquelles s'effectue l'injection de la résine dans le moule, un certain nombre de capteurs est placé dans le circuit d'injection. A titre d'exemple, on a représenté sur la figure unique trois capteurs de pression Pa, Pb et Pi, placés respectivement à la sortie des pompes 20a et 20b et à l'entrée du moule 10 et trois capteurs de température Ta, Tb et Ti placés à proximité des capteurs de pression Pa, PB et Pi. Des capteurs de pression et de température (non représentés) sont aussi prévus, de préférence, sur le moule 10.

L'installation comprend en outre une canalisation 42 de mise en dépression du moule 10, préalablement à l'injection de la résine. La canalisation 42 relie le moule 10 à une pompe à vide 44. Elle est raccordée sur le moule 10 à l'opposé de la canalisation 28 et intègre une électrovanne 46.

Enfin, l'installation d'injection de résine illustrée sur la figure unique comprend une unité centrale de commande 48. Cette unité 48 pilote les éléments actifs de l'installation, tels que les pompes 20a et 20b, la pompe à vide 44, les électrovannes 30a, 30b, 34a, 34b et 46 et les moyens de chauffage intégrés dans les plateaux 18a et 18b et dans les zones 36a, 36b, 38 et 40, selon un programme préétabli, en tenant compte des signaux délivrés par les capteurs de pression Pa, Pb et Pi et par les capteurs de température Ta, Tb et Ti. L'unité centrale de commande 48 comprend généralement un ordinateur et un automate programmable. Elle permet notamment d'injecter la résine dans le moule selon un cycle qui va à présent être décrit.

Avant l'injection proprement dite, on met en place les réservoirs 16a et 16b remplis d'une même résine, adaptée à la pièce que l'on désire fabriquer. Plus précisément, la résine placée dans les réservoirs est généralement de la résine dégazée. Dans le cas contraire, un ou plusieurs dispositifs de dégazage sont placés dans le circuit d'injection.

Lorsque les réservoirs 16a et 16b emplis de résine sont en place, les plateaux chauffants 18a et 18b portant les pompes 20a et 20b sont posés sur la surface libre de la résine, dans chacun des réservoirs, de façon à les fermer de manière étanche.

Parallèlement, le moule 10 contenant la préforme fibreuse 14 est fermé et raccordé sur le circuit d'injection et sur la canalisation de vide 42. A ce stade, les électrovannes 30a, 30b, 34a, 34b et 46 sont toutes fermées.

Les moyens de chauffage intégrés aux plateaux 18a et 18b et aux zones chauffantes 36a, 36b, 38 et 40 sont ensuite actionnés, notamment afin de faire fondre localement la résine adjacente aux plateaux chauffants, dans chacun des réservoirs 16a et 16b.

Lorsque la température désirée est atteinte, les circuits d'injection de résine matérialisés par les canalisations 26a et 26b sont purgés. A cet effet, les électrovannes 34a et 34b sont ouvertes et les pompes 20a et 20b sont mises en oeuvre. L'air contenu dans les circuits et entre les plateaux 18a et 18b et la surface libre de la résine est ainsi évacué et remplacé par de la résine.

Dans le même temps, la pompe à vide 44 est actionnée et l'électrovanne 46 est ouverte, de façon à faire le vide à l'intérieur du moule 10 ainsi que dans la partie du circuit d'injection situé en aval des électrovannes 30a et 30b. Le circuit de vide 42 est maintenu dans cet état jusqu'à la fin de l'injection.

Lorsque la purge des circuits d'injection de résine est terminée, les électrovannes de purge 34a et 34b sont fermées et l'injection de la résine dans le moule peut commencer.

L'injection commence à partir de l'un des réservoirs, tel que le premier réservoir 16a sur la figure unique. Elle est déclenchée par l'ouverture de l'électrovanne d'injection correspondante 30a. Au fur et à mesure que la résine fondue à la surface libre du réservoir 16a est injectée dans le moule, sous l'action conjointe de la pompe 20a et de la pompe à vide 44, le plateau 18a descend dans le réservoir 16a par gravité et sous l'effet des forces de capillarité. La face inférieure du plateau chauffant reste donc en contact avec la surface libre de la résine, qui fond ainsi progressivement sur une épaisseur permettant son pompage, sans risque de réaction exothermique.

Le volume de résine injecté dans le moule est contrôlé, par exemple en mesurant le nombre de tours de la pompe 20a, dans le cas où une pompe rotative est utilisée. Etant donné que le volume de résine contenu dans le réservoir 16a est connu, on détecte ainsi le moment où celui-ci est presque vide, c'est-à-dire le moment où l'injection de la résine doit être basculée du premier réservoir 16a au deuxième réservoir 16b.

Lorsque l'état "presque vide" du premier réservoir 16a est détecté, l'unité centrale de commande 48 ferme l'électrovanne d'injection 30a et ouvre simultanément l'électrovanne d'injection 30b. En outre, l'opérateur en est immédiatement informé par des moyens d'affichage sonore et/ou visuels.

L'injection de la résine dans le moule 10 se poursuit alors, sans discontinuité, à partir du deuxième réservoir 16b. Le processus d'injection de la résine à partir du deuxième réservoir 16b est le même que celui qui a été décrit auparavant dans le cas du premier réservoir 16a. Il n'en sera donc pas fait de description détaillée.

Dans le même temps, l'opérateur qui a été averti de l'état "presque vide" du premier réservoir le remplace par un réservoir plein, après en avoir extrait le plateau chauffant 18a portant la pompe 20a. Il est à noter qu'il dispose d'un temps amplement suffisant pour le faire puisque le temps d'injection d'environ 10 kilogrammes de résine contenus par exemple dans chaque réservoir est d'environ 13 minutes, pour un débit moyen d'environ 700 grammes par minute.

Lorsque l'opérateur a changé le réservoir 16a, il remet en place le plateau chauffant 18a portant la pompe 20a. Les moyens de chauffage du plateau 18a sont alors remis en fonctionnement et une nouvelle purge du circuit d'injection correspondant est effectuée en actionnant la pompe 20a et en ouvrant l'électrovanne 30a. Lorsque ces opérations sont terminées, l'injection de résine à partir du premier réservoir 16a est à nouveau possible.

Par conséquent, dés que l'état "presque vide" du deuxième réservoir 16b est détecté, par exemple grâce à un comptage du nombre de tours du moteur 22b de la pompe 20b, l'injection de résine bascule du deuxième réservoir 16b au premier réservoir 16a. Cela est obtenu par la fermeture de l'électrovanne 30b et l'ouverture simultanée de l'électrovanne 30a, commandés par l'unité centrale de commande 48.

Comme précédemment, l'unité centrale de commande 48 avertit l'opérateur de l'état "presque vide" du deuxième réservoir 16b. Celui-ci doit donc être à nouveau remplacé par un réservoir plein de résine par l'opérateur. Cette opération est réalisée de la même manière que cela a été décrit précédemment pour le premier réservoir 16a, c'est-à-dire par un démontage du plateau 18b, un remplacement du réservoir 16b, une remise en place du plateau 18b et une vidange du circuit correspondant.

Les opérations qui viennent d'être décrites sont renouvelées autant de fois que nécessaire, jusqu'au remplissage complet de la cavité 12 du moule 10 par la résine. Elles permettent de fabriquer une pièce de grandes dimensions, sans interrompre l'injection de la résine, en n'utilisant que deux réservoirs 16a et 16b à la fois, que l'on relie alternativement au moule 10, et en remplaçant l'un des réservoirs pendant que l'autre est utilisé pour l'injection.

Le procédé d'injection de résine selon l'invention permet ainsi de fabriquer des pièces de dimensions variables, sans autres limitations de taille que celles qui sont imposées par la viscosité de la résine, au moyen d'une installation d'encombrement réduit et dont la mise en oeuvre est particulièrement simple. De plus, le chauffage localisé de la résine dans les réservoirs permet de supprimer les risques de réaction exothermique qui découlent d'un chauffage en masse de la résine.

## Revendications

1. Procédé d'injection de résine dans un moule (10) contenant une préforme fibreuse (14), **caractérisé en ce qu'**on injecte la résine dans le moule (10) alternativement à partir d'un premier réservoir (16a) et à partir d'un deuxième réservoir (16b), pour les vider à tour de rôle, et on met en place le premier réservoir (16a) plein de résine tout en injectant la résine à partir du deuxième réservoir (16b), et inversement, de façon à injecter en continu dans le moule (10) une quantité de résine supérieure au contenu cumulé desdits premier réservoir (16a) et deuxième réservoir (16b).

2. Procédé selon la revendication 1, dans lequel on injecte la résine alternativement à partir du premier réservoir (16a) et à partir du deuxième réservoir (16b) en chauffant la surface libre de la résine contenue dans lesdits réservoirs, pour provoquer une fusion locale de ladite résine, et en pompant vers le moule (10) la résine localement fondue.

3. Procédé selon la revendication 2, dans lequel, dans chacun des premier et deuxième réservoirs (16a, 16b), on chauffe la surface libre de la résine au moyen d'un plateau chauffant (18a, 18b) reposant par gravité sur ladite surface libre.

4. Procédé selon la revendication 3, dans lequel, dans chacun des premier et deuxième réservoirs (16a, 16b), on pompe la résine localement fondue au moyen d'une pompe (20a, 20b) solidaire du plateau chauffant (18a, 18b).

5. Procédé selon l'une quelconque des revendicàtions précédentes, dans lequel, avant d'injecter la résine dans le moule (10), on purge des circuits reliant le premier réservoir (16a) et le deuxième réservoir (16b) audit moule.

6. Procédé selon l'une quelconque des revendications précédentes, dans lequel on utilise de la résine dégazée.

7. Procédé selon l'une quelconque des revendications 1 à 5, dans lequel on dégaze la résine entre les premier et deuxième réservoirs (16a, 16b) et le moule (10).

## Patentansprüche

1. Verfahren zum Einspritzen von Harz in eine eine faserige Vorform (14) enthaltene Form (10), **dadurch gekennzeichnet, dass** das Harz in die Form (10) abwechselnd ausgehend von einem ersten Behälter (16a) und ausgehend von einem zweiten Behälter (16b) eingespritzt wird, um sie abwechselnd zu leeren, und dass der erste Behälter (16a) voll mit Harz bereitgestellt wird, während das Harz ausgehend von dem zweiten Behälter (16b) eingespritzt wird, und umgekehrt derart, dass in die Form (10) in kontinuierlicher Weise eine Menge an Harz eingespritzt wird, welche größer ist als der kumulierte Inhalt des ersten Behälters (16a) und des zweiten Behälters (16b).

2. Verfahren nach Anspruch 1, bei welchem das Harz abwechselnd ausgehend von dem ersten Behälter (16a) und ausgehend von dem zweiten Behälter (16b) eingespritzt wird, indem die freie Oberfläche des in den Behältern enthaltenen Harzes aufgeheizt wird, um ein lokales Schmelzen des Harzes hervorzurufen, und indem das lokal geschmolzene Harz zu der Form (10) gepumpt wird.

3. Verfahren nach Anspruch 2, wobei in jedem des ersten und zweiten Behälters (16a, 16b) die freie Oberfläche des Harzes mittels einer Heizplatte (18a, 18b), welche durch die Schwerkraft auf der freien Oberfläche ruht, geheizt wird.

4. Verfahren nach Anspruch 3, bei welchem in jeden des ersten und zweiten Behälters (16a, 16b) das lokal geschmolzene Harz mittels einer mit der Heizplatte (18a, 18b) verbundenen Pumpe (20a, 20b) gepumpt wird.

5. Verfahren nach einem der vorhergehenden Ansprüche, bei welchem vor dem Einspritzen des Harzes in die Form (10) die den ersten Behälter (16a) und den zweiten Behälter (16b) mit der Form verbindenden Leitungen gereinigt werden.

6. Verfahren nach einem der vorhergehenden Ansprüche, bei welchem ausgegastes Harz benutzt wird.

7. Verfahren nach einem der Ansprüche 1-5, bei welchem das Harz zwischen den ersten und zweiten Behältern (16a, 16b) und der Form (10) ausgegast wird.

## Claims

1. Method for injecting resin into a mould (10) containing a fibrous preform (14), **characterized in that** the resin is injected into mould (10) alternately from a first reservoir (16a) and from a second reservoir (16b) so that they are emptied in turn, and the first reservoir (16a) filled with resin is placed in position while injecting resin from the second reservoir (16b) and conversely, for the continuous injection into mould (10) of a quantity of resin greater than the accumulated capacity of said first reservoir (16a) and second reservoir (16b).

2. Method according to claim 1, in which the resin is alternately injected from the first reservoir (16a) and from second reservoir (16b) by heating the free surface of the resin contained in said reservoirs to cause local melting of said resin, and by pumping the locally melted resin towards mould (10).

3. Method according to claim 2 in which, in each of the first and second reservoirs (16a, 16b) the free surface of the resin is heated by means of a heating tray (18a, 18b) resting under gravity on said free surface.

4. Method according to claim 3 in which, in each of the first and second reservoirs (16a, 16b), the locally melted resin is pumped by means of a pump (20a, 20b) integral with heating tray (18a, 18b).

5. Method according to any of the preceding claims in which, prior to injecting the resin into mould (10), the circuits connecting the first reservoir (16a) and second reservoir (16b) to said mould are drained.

6. Method according to any of the preceding claims in which degassed resin is used.

7. Method according to any of claims 1 to 5, in which the resin is degassed between the first and second reservoirs (16a, 16b) and mould (10).
